# EUROPÄISCHE PATENTANMELDUNG

(11) **EP 0 920 139 A1**
(43) Veröffentlichungstag der Anmeldung: **02.06.1999**
(21) Anmeldenummer: 97250364.3
(22) Anmeldetag: 28.11.1997
(51) Int. Cl.: H04B 1/20

(54) **Verfahren zur Steuerung von an ein zentrales Steuergerät angeschlossenen Geräten und entsprechendes Steuergerät**

(71) Anmelder: DEUTSCHE THOMSON-BRANDT GMBH, 78048 Villingen-Schwenningen (DE)
(72) Erfinder: Zwing, Rainer, 78052 Villingen-Schwenningen (DE); Sagcob, Thomas, 78166 Danaueschingen (DE)
(74) Vertreter: Hartnack, Wolfgang, Dipl.-Ing.

(57) **Zusammenfassung**

Mit zunehmender Vielfalt der vorhandenen Geräte wie TV, VCR, PC, CDP ist es notwendig, für den Benutzer ein einheitliches Steuerungs- und Bediensystem zur Verfügung zu stellen. Dieses System ermöglicht es, einzelne Geräte automatisch zu erkennen, um sie dann mit einer Fernbedienung steuern zu können. Ein zentrales Steuergerät, z.B. ein TV oder ein PC, ist einerseits mittels Leitungen für z.B. Video- und/oder Audio-Signale mit dem zentralen Steuergerät verbunden und andererseits für die Übertragung von Steuerbefehlen über eine IR-Strecke an weitere Geräte angeschlossen.
Beim Einschalten des zentralen Steuergerätes oder per Menue-Auswahl wird automatisch eine Geräte-Konfigurations-Routine gestartet, die prüft, an welchen SCART-Aus/Eingängen des zentralen Steuergeräts Geräte angeschlossen sind. Für solche SCART-Buchsen wird anschließend die Testreaktion auf vorbekannte IR-Befehle an den SCART-Eingängen des zentralen Steuergerätes ermittelt. Anhand dieser Reaktionen wird im zentralen Steuergerät eine Gerätetypen-Auswahl für den jeweiligen SCART-Aus/Eingang getroffen.

## Beschreibung

Die Erfindung betrifft ein Verfahren zur Steuerung von an ein zentrales Steuergerät angeschlossenen Geräten und ein entsprechendes Steuergerät, wobei Steuerbefehle aus einem vorhandenen Satz von Steuerbefehlen automatisch ermittelt werden.

### Stand der Technik

Video/Audio-Unterhaltungselektronik-Geräte werden mittels genormter Steckverbindungen verbunden. In Europa ist hierzu die SCART-Verbindung üblich. Im weiteren werden folgende Abkürzungen verwendet:
- TV: Fernsehgerät
- CDP: Compact-Disc- oder DVD-Abspielgerät
- VCR: Videorecorder oder CDP mit Bespielbarkeit von Platten
- IRD: Integrated Receiver Decoder oder auch Set-Top-Box
- PC: Computer
- IR: Infrarot
- OSD: On-Screen-Display

Der IRD von Nokia ('d-Box') bietet die Möglichkeit, einen VCR durch gesendete Infrarot-Kommandos zu steuern. Dazu muß der Gerätehersteller des VCR mittels eines Auswahlmenues angegeben werden. Anschließend werden mehrere Testläufe absolviert, um den vorhandenen VCR des Benutzers zu detektieren. Stellt der Bediener fest, daß sein VCR reagiert hat, muß er dies quittieren, damit kein weiterer Testlauf gestartet wird. Die Geräte-Auswahl bzw. -Zuordnung wird somit vom Benutzer festgelegt. Dieses Verfahren funktioniert aber nicht unter allen Umständen zufriedenstellend. Es kann zwar ein VCR im Testlauf angesteuert werden, doch die bestätigten Test-Daten werden nach dem Testlauf nicht weiterverwendet.

### Erfindung

Mit zunehmender Vielfalt der vorhandenen Geräte wie TV, VCR, PC, CDP, Videokamera ist es notwendig, für den Benutzer ein einheitliches Steuerungs- und Bediensystem zur Verfügung zu stellen. Dieses System ermöglicht es, einzelne Geräte automatisch zu erkennen, um sie dann mit einem einheitlichen, schlüssigen Konzept, d.h. mittels einer einzigen Fernbedienung steuern zu können, eventuell mit OSD.

Der Erfindung liegt die Aufgabe zugrunde, ein Verfahren zur automatischen Geräte-Einbindung in ein einheitliches Steuerungs- und Bediensystem anzugeben, bei dem sowohl die Geräte-Art als auch der spezielle Hersteller-Gerätetyp bzw. dessen IR-Code automatisch erkannt wird und damit die Voraussetzung für eine einheitliche Steuerung geschaffen wird. Diese Aufgabe wird durch das in Anspruch 1 angegebene Verfahren gelöst.

Der Erfindung liegt die weitere Aufgabe zugrunde, eine Vorrichtung zur Anwendung des erfindungsgemäßen Verfahrens anzugeben. Diese Aufgabe wird durch die in Anspruch 9 angegebene Vorrichtung gelöst.

Die Erfindung ermöglicht es dem Benutzer, neue Geräte hinzuzufügen oder alte gegen neue Geräte auszutauschen, ohne sich mit deren spezieller Bedienungs-Philosophie auseinandersetzten zu müssen.
Ein zentrales Steuergerät, z.B. ein TV oder ein PC, ist einerseits mittels Leitungen für z.B. Video- und/oder Audio-Signale und/oder Schaltspannungen mit dem zentralen Steuergerät verbunden und andererseits für die Übertragung von Steuerbefehlen mittels Kabelverbindung oder über eine IR-Strecke an weitere Geräte angeschlossen, die von diesem zentralen Steuergerät angesteuert werden. Diese weiteren Geräte können z.B. ein VCR und/oder ein IRD und/oder im Fall des PCs als zentrales Steuergerät ein TV sein. Im Fall der IR-Strecke stellt das zentrale Steuergerät mittels IR-Sender eine drahtlose Verbindung zu den einzelnen Geräten her. Der Installationsprozeß mit automatischer Erkennung der angeschlossenen Geräte wird prinzipiell folgendermaßen abgearbeitet:
1) Das zu steuernde Gerät wird mittels SCART-Leitung oder anderer Leitungen für Video- und/oder Audio-Signale mit dem zentralen Steuergerät verbunden. Im Fall von digitalen Geräten können diese Leitungen z.B. einen genormten Bus enthalten.
2) Das zu steuernde Gerät muß in Stand-by-Betrieb oder Power-On-Betrieb geschaltet sein oder per IR-Befehl in einen entsprechenden Zustand schaltbar sein.
3) Im Falle eines VCRs bzw. Spielers für ein anderes Medium - wie z.B. eine optische Platte - als zu steuerndes Gerät sollte entweder eine Leerkassette bzw. Leermedium oder eine bespielte, aber bespielbare Kassette bzw. ein bespieltes Medium eingelegt sein, damit die Testreaktion auf einen Aufnahme- und/oder Wiedergabe-Befehl ermittelt werden kann.
4) Beim Einschalten des zentralen Steuergerätes oder per Menue-Auswahl am zentralen Steuergerät wird nun automatisch eine Geräte-Konfigurations-Routine gestartet, die prüft, an welchen SCART-Aus/Eingängen des zentralen Steuergeräts Geräte angeschlossen sind. Dazu wird z.B. die Ausgangs-Impedanz der Videoleitungen der SCART-Verbindung gemessen.
5) Jetzt werden vorbekannte IR-Codes für verschiedene Geräte bzw. Hersteller-Typen dieser Geräteart gesendet und die Reaktionen an entsprechenden Eingängen der belegten SCART-Aus/Eingänge geprüft.
6) Anhand der ermittelten Reaktionen auf den gesendeten IR-Code an den SCART-Eingängen des zentralen Steuergeräts wird im zentralen Steuergerät eine Gerätetypen-Auswahl für den jeweiligen SCART-Aus/Eingang getroffen.
7) Sollte eine eindeutige Identifizierung eines angeschlossenen Geräts nicht möglich sein - z.B. im Fall von mehreren Geräte-Varianten mit gleichem Code, insbesondere beim gleichen Hersteller - werden dem Benutzer die in Frage kommenden Geräte in einem Auswahlmenue angeboten, sofern dies für das zu steuernde Gerät nötig ist. Bei bau- oder funktionsgleichen Geräten verschiedener Marken ist eine eindeutige Identifizierung oft nicht notwendig.
8) Für den Benutzer kann die Möglichkeit vorgesehen werden, eine Check-Routine bei jedem Einschalten des zentralen Steuergeräts ablaufen zu lassen. Diese prüft dann anhand bereits ermittelter IR-Codes, ob die gespeicherte Gerätekonfiguration noch gültig ist. Diese Option kann auch per Softwaremenue abschaltbar sein oder nur auf Befehl des Benutzers ablaufen. Hat sich durch Tausch oder Entfernung von Geräten nur die SCART-Belegung geändert, wird dies vom zentralen Steuergerät automatisch berücksichtigt.
   Zur Aktualisierung der im zentralen Steuergerät gespeicherten IR-Codes kann ein Software-Update ermöglicht werden. Im Fall eines PCs als zentrales Steuergerät, kann dies durch eine Diskette oder durch Laden mittels Telefonleitungs-Modem geschehen. Im Fall eines TVs oder eines digitalen Video- und/oder Audio-Receivers als zentrales Steuergerät kann das Laden mittels Telefonleitungs-Modem (vorteilhaft bei Pay-TV oder Pay-Audio) oder über den Sende-Kanal (Satellit, Kabel, terrestrisch) eines Video- und/oder Audio-Signals geschehen. Softwarekonzepte, die solche Download-Fähigkeiten haben, sind bereits in der Markteinführung, z.B. OpenTV von Thomson/Sun Interactive. Es gibt Firmen wie z.B. Universal Electronic Inc., USA, die Daten über IR-Codes vertreiben, auch Daten über europäische IR-Codes.

Im Prinzip handelt es sich um ein Verfahren zur Steuerung von an ein zentrales Steuergerät angeschlossenen Geräten, wobei Testsignale vom zentralen Steuergerät zu den angeschlossenen Geräten und/oder von den angeschlossenen Geräten zum zentralen Steuergerät geleitet werden können und die angeschlossenen Geräte mit ihnen zugehörigen, festgelegten Steuerbefehlen vom zentralen steuergerät aus angesteuert werden, und wobei automatisch mittels durch die Anschluß-Impedanzen von angeschlossenen Geräten bedingten Signaländerungen auf Leitungen für die Testsignale oder mittels Messung von entsprechenden Ausgangsimpedanzen an Anschlüssen des zentralen Steuergeräts und/oder automatisch durch Überprüfen des Vorhandenseins oder Nicht-Vorhandenseins von Testsignalen aufgrund von Aussenden von Test-Steuerbefehlen vom zentralen Steuergerät zu den angeschlossenen Geräten ermittelt wird, welcher Art die angeschlossenen Geräte sind und an welchen Anschlüssen des zentralen Steuergeräts sie angeschlossen sind und daß aufgrund der ermittelten Art bei Wahl eines der Anschlüsse ein im zentralen Steuergerät gespeicherter Satz von zugehörigen, festgelegten Steuerbefehlen für das entsprechende angeschlossene Gerät ausgewählt wird.

Vorteilhafte weiterbildungen des erfindungsgemäßen Verfahrens ergeben sich aus den zugehörigen abhängigen Ansprüchen.

Im Prinzip handelt es sich um ein zentrales steuergerät mit daran anschließbaren Geräten, bei dem Testsignale zu den angeschlossenen Geräten und/oder von den angeschlossenen Geräten zum zentralen Steuergerät geleitet werden können und welches die angeschlossenen Geräte mit ihnen zugehörigen, festgelegten Steuerbefehlen ansteuert, mit Mitteln, die automatisch die durch die Anschluß-Impedanzen von angeschlossenen Geräten bedingten Signaländerungen auf Leitungen für die Testsignale bestimmen oder automatisch entsprechende Ausgangsimpedanzen an Anschlüssen des zentralen Steuergeräts bestimmen und/oder die automatisch durch Überprüfen des Vorhandenseins oder Nicht-Vorhandenseins von Testsignalen aufgrund von Aussenden von Test-Steuerbefehlen zu den angeschlossenen Geräten ermitteln, welcher Art die angeschlossenen Geräte sind und an welchen Anschlüssen des zentralen Steuergeräts sie angeschlossen sind und die aufgrund der ermittelten Art bei Wahl eines der Anschlüsse einen im zentralen Steuergerät gespeicherter Satz von zugehörigen, festgelegten Steuerbefehlen für das entsprechende angeschlossene Gerät auswählen.

Vorteilhafte Weiterbildungen der erfindungsgemäßen Vorrichtung ergeben sich aus den zugehörigen abhängigen Ansprüchen.

### Zeichnungen

Anhand der Zeichnungen sind Ausführungs-Beispiele der Erfindung beschrieben. Diese zeigen in:
- Fig. 1: eine mögliche Konfiguration, bei der ein TV-Gerät die zentrale Steuerung übernimmt;
- Fig. 2: ein Flußdiagram der Abfragesteuerung zur automatischen Erkennung der an das zentrale Steuergerät angeschlossenen Geräte.

### Ausführungs-Beispiele

Wie oben bereits angedeutet, können in Zukunft Busse oder andere Hardware-Verbindungen zwischen den beteiligten Geräten zur Anwendung kommen. Der Vorteil der SCART-Verbindungen oder entsprechender Verbindungen ist, das heute bereits vorhandene Geräte benutzt werden können. Als zukünftige Busse könnten in Frage kommen:
IEEE 1394 High Performance Serial Bus
   IEEE Standards Department
   445 Hoes Lane, P.O. Box 1331
   Piscataway, NJ 8855-1331, USA
Universal Serial Bus (USB)
   Computer ACCESS Technology Corporation
   3375 Scott BLVD., Suite 410
   Santa Clara, CA 95054
AV-Link (prEN 50157-1)
   CENELEC
   Zentralsekretariat
   Rue de Stassart 35
   B-1050 Brüssel

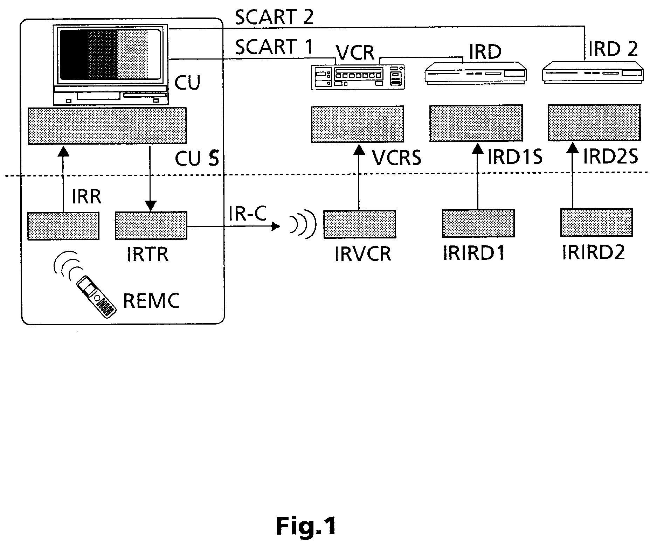

Fig. 1 zeigt ein TV-Gerät CU als zentrales Steuerungsgerät. CU enthält eine interne Steuerung CUS mit entsprechender Software. Die von einer zentralen Fernbedienung REMC abgegebenen Befehle werden von einem IR-Empfänger verstärkt und möglicherweise decodiert und an CUS weitergeleitet. CU ist über eine erste SCART-Verbindung SCART1 mit einem Videorecorder VCR und dieser weiter mit einem ersten Satelliten-Decoder IRD1 verbunden. IRD1 kann auch direkt durch eine weitere SCART-Verbindung an CU angeschlossen sein. CU ist über eine zweite SCART-Verbindung SCART2 mit einem zweiten Satelliten-Decoder IRD2 verbunden. Zu VCR, IRD1 und IRD2 gehören die internen Steuerungen VCRS, IRD1S und IRD2S mit der zugehörigen Software. Diese sind wiederum jeweils mit einem zugehörigen IR-Empfänger IRVCR, IRIRD1 und IRIRD2 verbunden. IRTR sendet seine IR-Befehle IR-C zu IRVCRS, IRIRD1S und IRIRD2S.

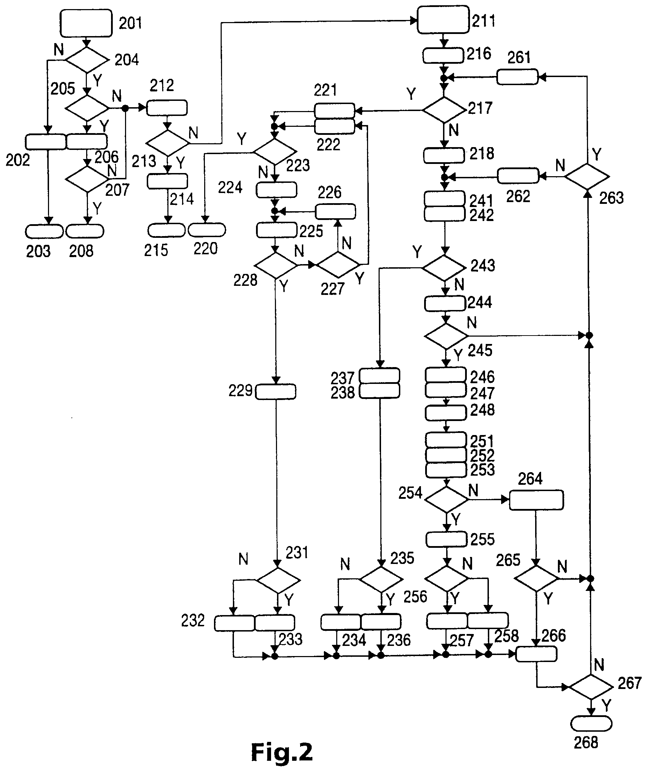

Im Folgenden beziehen sich die in geschweiften Klammern angegebenen Schritte auf das Flußdiagramm in Fig. 2.
Nach dem Einschalten des CU {201} wird geprüft {204}, welche SCART-Anschlüsse von CU an ein anderes Gerät angeschlossen sind. Bei dieser Überprüfung kann z.B. die 75Ω-Impedanz von Video-Eingängen der angeschlossenen Geräte verwendet werden, da im Fall einer Belastung des entsprechenden 75Ω-CU-Ausgangs mit 75Ω an dieser Impedanz die halbe unbelastete CU-Ausgangsspannung abfällt. Manche Geräte, z.B. VCRs, erzeugen aufgrund bestimmter Befehle, z.B. Wiedergabe, eine Schaltspannung auf einer der SCART-Leitungen, die das angeschlossene Gerät vom Normalbetrieb auf einen Betrieb zur Wiedergabe der VCR-Signale umschaltet. Solche Schaltspannungen können ebenfalls oder zusätzlich zur sichereren Erkennung ausgewertet werden. Statt der 75Ω-Eingangs- und Ausgangs-Impedanz von Videoleitungen oder zusätzlich dazu können auch die 1kΩ-Ausgangsimpedanz und 10kΩ-Eingangsimpedanz von Audioleitungen entsprechend verwendet werden. Sollten keine SCART-Verbindungen belegt sein, ist eine Installations-Routine nicht notwendig. Eventuell vorhandene Konfigurations-Einträge in Speichermitteln von CU können dann gelöscht {202} werden.
Ist jedoch eine Belegung von SCART-Verbindungen von CU vorhanden, werden von den entsprechend in einer SCART-Belegungsliste in CUS eingetragenen Geräten die zugehörigen IR-Codes zur eindeutigen Identifikation gesendet {206}. Sind die Reaktionen an den zugehörigen SCART-Video-Eingängen und/oder Schaltspannungs-Eingängen von CU wie erwartet {207}, d.h. entsprechend der aktuellen SCART-Belegungsliste, ist eine Neuinstallation {211} nicht notwendig {2}. Treten Reaktionen auf die gesendeten IR-Codes an anderen SCART-Buchsen oder SCART-Anschlüssen von CU auf {205}, hat der Kunde eine SCART-Verbindung oder Geräte vertauscht. Diese Vertauschung wird in der Belegungsliste vermerkt {214}, eine Neuinstallation mit Austesten von gültigen IR-Codes ist nicht notwendig. Sollte die SCART-Belegung aber nicht eindeutig erkennbar sein, ist für die entsprechenden SCART-Anschlüsse eine Neuinstallation {211} erforderlich.

Für die Neuinstallation {211} sind in einer IR-Code-Liste oder in mehreren solcher Listen Daten zu vorzugsweise sämtlichen bekannten IR-Codes peripher anschließbarer Geräte vorhanden. Zweckmäßigerweise ist diese Liste bzw. sind diese Listen nach der Anzahl der jeweils verkauften Geräte sortiert, um die Geräte-Erkennung so schnell wie möglich zu gestalten. Der zugehörige Pointer auf die IR-Code-Daten für ein bestimmtes zu steuerndes Gerät wird zu Beginn der Neuinstallation zurückgesetzt {216}. Die Abfrage auf eine Reaktion auf einen IR-Code wird nacheinander an allen zu prüfenden, d.h. unbekannt belegten SCART-Buchsen durchgeführt. An die zu prüfende SCART-Buchse wird dabei zunächst kein Video-Ausgangssignal gespeist {241}.
Nun wird der IR-Code 'ON' und, wenn vorhanden, 'AV' des ersten Gerätes in der IR-Code-Liste gesendet {242}. Sollte sich an der jeweiligen SCART-Buchse ein Video-Eingangssignal detektieren lassen {243}, kann es sich bei dem Gerät nur um einen IRD, der eine decodierte Sendung bzw. ein Menue sendet, oder um einen CDP mit Menue, d.h. mit OSD handeln. Ein VCR oder konventioneller Pay-TV-Decoder würde aufgrund des AV-Kommandos nur ein Rauschsignal zurückspeisen.

Es wird nun angenommen, daß ein IRD oder CDP mit OSD vorliegt. Nachdem die Reaktion auf ON detektiert wurde, wird nun der 'PLAY'-Code und danach der 'STOP'-Code des gleichen Geräts gesendet {237, 238}. Auf PLAY hin wird nach der SCART-Norm ein Schaltsignal (Blanking) an Pin 8 der SCART-Buchse aktiviert. Ob dieses Signal nach dem STOP-Signal auch deaktiviert wird {235}, ist häufig geräte- oder herstellerspezifisch und somit ein weiteres Auswahlkriterium für den richtigen IR-Code.
Sollten nach dieser Überprüfung trotzdem noch mehrere Gerätetypen in Frage kommen, die nicht in Funktion und zugehörigem IR-Code übereinstimmen, wird dem Benutzer ein Auswahlmenue angeboten {234, 236}, in dem dann die endgültige Entscheidung für ein spezifisches Gerät getroffen wird. Vorteilhaft ist im Fall von mehreren funktions- und IR-Codegleichen Geräten von verschiedenen Marken oder Herstellern, daß keine eindeutige Zuordnung notwendig ist, wenn CU in der Lage ist, sämtliche Funktionen aufzurufen bzw. zu kontrollieren.

Im Folgenden wird nun angenommen, daß ein VCR oder konventioneller Pay-TV-Decoder vorliegt. Nachdem versucht wurde, das Gerät auf 'AV' zu schalten und kein Video-Eingangssignal an der SCART-Buchse anliegt {243}, wird nun von CU ein Video-Ausgangssignal auf die SCART-Buchse gegeben {244}. Es wird sich an der SCART-Buchse ein entsprechendes Video-Eingangssignal einstellen, wenn das Gerät ein VCR oder ein konventioneller Pay-TV-Decoder mit dem entsprechenden IR-Code ist {245}. Sollte dies nicht der Fall sein, wird die Prüfroutine verlassen und die nächste SCART-Buchse oder der nächste IR-Code überprüft. Ansonsten wird durch eine Eigenaufnahme {246, 247} mit nachfolgender Playback-Kontrolle {251 - 253} zwischen VCR und konventionellem Pay-TV-Decoder unterschieden {254}. Bei einem VCR ist durch das Schaltsignal an Pin 8 nach dem STOP-Signal eine weitere Unterscheidung möglich {256}. Danach erscheint, wenn noch nicht die nötigen Informationen selbsttätig ermittelt werden konnten, ein Auswahlmenue wie oben beschrieben.
Bei einem konventionellen Pay-TV-Decoder liegt in diesem Test-Zustand an dessen SCART-Ausgang ein verscrambeltes Video-Signal an, von dem man annimmt, daß der Decoder es auch tatsächlich entschlüsseln könnte, wenn er mit einer Schaltspannung an Pin 8 der SCART-Verbindung reagiert. Da ein solcher Decoder ein eher passives Gerät ohne weitere erforderliche IR-Code-Steuerbefehle ist, ist die Erkenntnis, daß er funktioniert und an welcher SCART-Buchse er angeschlossen ist, bereits ausreichend, ohne daß der genaue Typ des Geräts weiter identifiziert zu werden braucht. Es könnte nur noch geprüft werden, ob das Gerät in der Lage ist, auch mehrere Quellen oder Quellsignal-Arten zu decodieren. Dann könnte ein IR-Code-Steuerbefehl zur Quellen- und/oder Quellsignalart-Auswahl erforderlich sein.

Das detektierte Gerät wird in der Belegungsliste eingetragen {266}. Sollte diese Liste noch nicht komplett sein, (die Größe der Liste richtet sich nach der Anzahl der belegten SCART-Buchsen), wird die nächste SCART-Buchse abgefragt {261} bzw. ein neuer IR-Code gesendet.
Ist das Ende der IR-Code-Liste erreicht, ohne daß der Gerätetyp bzw. die SCART-Buchsenbelegung eindeutig ermittelt wurde, kann es sich nur noch um einen älteren CDP ohne OSD handeln oder um ein unbekanntes, vielleicht ganz neues Gerät.

Um herauszufinden, ob es sich um einen älteren CDP ohne OSD handelt, wird der CDP auf Reaktionen auf den IR-Code-PLAY-Befehl überprüft {225, 228}. Auch hier ist die Anfrage der Schaltspannung an Pin 8 {231} ein weiteres Unterscheidungsmerkmal.

Ist auch jetzt eine Zuordnung noch nicht möglich, wird die automatische Detektions- bzw. Neuinstallations-Routine verlassen. Der Gerätetyp wird vom Bediener eingegeben und die Belegungs-Liste und die IR-Code-Liste entsprechend aktualisiert.

In Fig. 2 habe die Bezugszeichen folgende Bedeutung:
- 201: CU einschalten
- 202: eventuell Eintrag in SCART-Belegungsliste löschen
- 203: ENDE
- 204: SCART-Buchse belegt?
- 205: SCART-Buchsen-Belegung wie bisher?
- 206: sende IR-Code früher detektierter Geräte
- 207: Reaktion an SCART wie erwartet?
- 208: ENDE
- 211: Neu-Installation
- 212: sende IR-Code früher detektierter Geräte
- 213: SCART-Buchsen-Belegung wie bisher?
- 214: Plätze in der SCART-Belegungsliste tauschen
- 215: ENDE
- 216: Reset Pointer für Code-Liste 1
- 217: Pointer am Ende von Code-Liste 1?
- 218: Reset Pointer für Buchse n-1 in SCART-Belegungsliste
- 220: ENDE
- 221: Reset Pointer für Code-Liste 2
- 222: Inkrementiere Pointer für Code-Liste 2
- 223: Pointer am Ende von Code-Liste 2?
- 224: Reset Pointer für Buchse n-1 in SCART-Belegungsliste
- 225: Sende PLAY IR-Code
- 226: Inkrementiere Pointer für SCART-Belegungsliste
- 227: wurde SCART-Buchse n überprüft?
- 228: Video- und/oder Audiosignal an Eingang von SCART-Buchse n vorhanden?
- 229: Sende STOP IR-Code
- 231: Schaltsignal an Pin 8 der SCART-Buchse n vorhanden?
- 232: CDP erkannt? Sonst Auswahlliste anzeigen
- 233: CDP erkannt? Sonst Auswahlliste anzeigen
- 234: CDP erkannt? Sonst Auswahlliste anzeigen
- 235: Schaltsignal an Pin 8 der SCART-Buchse n vorhanden?
- 236: CDP/IRD erkannt? Sonst Auswahlliste anzeigen
- 237: Sende PLAY IR-Code
- 238: Sende STOP IR-Code
- 241: kein Video- und/oder Audiosignal an Ausgang von SCART-Buchse n anlegen
- 242: Sende ON und AV IR-Code
- 243: Video- und/oder Audiosignal an Eingang von SCART-Buchse n vorhanden?
- 244: Video- und/oder Audiosignal an Ausgang von SCART-Buchse anlegen
- 245: Video- und/oder Audiosignal an Eingang von SCART-Buchse n vorhanden?
- 246: Sende RECORD IR-Code
- 247: Sende STOP IR-Code
- 248: kein Video- und/oder Audiosignal an Ausgang von SCART-Buchse n anlegen
- 251: Sende REWIND IR-Code
- 252: Sende STOP IR-Code
- 253: Sende PLAY IR-Code
- 254: Video- und/oder Audiosignal an Eingang von SCART-Buchse n vorhanden?
- 255: Sende STOP IR-Code
- 256: Schaltsignal an Pin 8 der SCART-Buchse n vorhanden?
- 257: VCR erkannt? Sonst Auswahlliste anzeigen
- 258: VCR erkannt? Sonst Auswahlliste anzeigen
- 261: Inkrementiere Pointer für Code-Liste 1
- 262: Inkrementiere Pointer für SCART-Belegungsliste
- 263: SCART-Buchse n überprüft?
- 264: gescramblete Video- und/oder Audiosignale am SCART-Buchsen-Ausgang
- 265: Schaltsignal an Pin 8 der SCART-Buchse n vorhanden?
- 266: Belegung von SCART-Buchse n in SCART-Belegungsliste eintragen
- 267: SCART-Belegung komplett?
- 268: ENDE

Bei Anfragen bedeutet Y 'JA' und N 'NEIN'.
Die Schritte 221-233 betreffen einen CDP ohne OSD. Die Schritte 234-238 betreffen einen CDP mit OSD oder einen IRD. Die Schritte 244-254 betreffen einen VCR und einen konventionellen Pay-TV-Decoder. Die Schritte 255-258 betreffen einen VCR. Die Schritte 264 und 265 betreffen einen konventionellen Pay-TV-Decoder.

## Patentansprüche

1. Verfahren zur Steuerung von an ein zentrales Steuergerät (CU) angeschlossenen Geräten (VCR, IRD1, IRD2), wobei Testsignale (IR-C) vom zentralen Steuergerät zu den angeschlossenen Geräten und/oder von den angeschlossenen Geräten zum zentralen Steuergerät geleitet werden können und die angeschlossenen Geräte mit ihnen zugehörigen, festgelegten Steuerbefehlen (IR-C) vom zentralen Steuergerät aus angesteuert werden, dadurch **gekennzeichnet,** daß automatisch mittels durch die Anschluß-Impedanzen von angeschlossenen Geräten bedingten Signaländerungen auf Leitungen (SCART1, SCART2) für die Testsignale oder mittels Messung von entsprechenden Ausgangsimpedanzen an Anschlüssen des zentralen Steuergeräts
und/oder automatisch durch Überprüfen des Vorhandenseins oder Nicht-Vorhandenseins von Testsignalen aufgrund von Aussenden von Test-Steuerbefehlen vom zentralen Steuergerät zu den angeschlossenen Geräten
ermittelt wird, welcher Art die angeschlossenen Geräte sind und an welchen Anschlüssen des zentralen Steuergeräts sie angeschlossen sind und daß aufgrund der ermittelten Art bei Wahl eines der Anschlüsse ein im zentralen Steuergerät gespeicherter Satz von zugehörigen, festgelegten Steuerbefehlen für das entsprechende angeschlossene Gerät ausgewählt wird.

2. Verfahren nach Anspruch 1, bei dem die Testsignale Video-, Audio- und/oder Schaltsignale sind.

3. Verfahren nach Anspruch 1 oder 2, bei dem die festgelegten Test-Steuerbefehle und Steuerbefehle IR-Code-Befehle (IR-C) sind.

4. Verfahren nach einem oder mehreren der Ansprüche 1 bis 3, bei dem das zentrale Steuergerät ein Fernsehgerät oder ein Computer ist.

5. Verfahren nach einem oder mehreren der Ansprüche 1 bis 4, bei dem die Anschlüsse des zentralen Steuergeräts SCART-Anschlüsse sind.

6. Verfahren nach einem oder mehreren der Ansprüche 1 bis 5, bei dem die Signaländerungen auf den Leitungen (SCART1, SCART2) für die Testsignale Spannungsabfälle sind.

7. Verfahren nach einem oder mehreren der Ansprüche 1 bis 6, wobei für den Fall, daß die Art eines Geräts nicht automatisch ermittelt werden kann, ein Benutzer die Geräteart und/oder den Satz von zugehörigen, festgelegten Steuerbefehlen (IR-C) auswählt.

8. Verfahren nach einem oder mehreren der Ansprüche 1 bis 7, wobei die Ermittlung von welcher Art die angeschlossenen Geräte sind und/oder an welchen Anschlüssen des zentralen Steuergeräts sie angeschlossen sind und/oder die Auswahl des im zentralen Steuergerät gespeicherten Satzes von festgelegten Steuerbefehlen beim Einschalten des zentralen Steuergeräts automatisch durchgeführt wird.

9. Zentrales Steuergerät (CU) mit daran anschließbaren Geräten (VCR, IRD1, IRD2), bei dem Testsignale (IR-C) zu den angeschlossenen Geräten und/oder von den angeschlossenen Geräten zum zentralen Steuergerät geleitet werden können und welches die angeschlossenen Geräte mit ihnen zugehörigen, festgelegten Steuerbefehlen (IR-C) ansteuert, **gekennzeichnet** durch Mittel (CU, CUS), die automatisch die durch die Anschluß-Impedanzen von angeschlossenen Geräten bedingten Signaländerungen auf Leitungen (SCART1, SCART2) für die Testsignale bestimmen oder automatisch entsprechende Ausgangsimpedanzen an Anschlüssen des zentralen Steuergeräts bestimmen und/oder die automatisch durch Überprüfen des Vorhandenseins oder Nicht-Vorhandenseins von Testsignalen aufgrund von Aussenden von Test-Steuerbefehlen zu den angeschlossenen Geräten ermitteln, welcher Art die angeschlossenen Geräte sind und an welchen Anschlüssen des zentralen Steuergeräts sie angeschlossen sind und die aufgrund der ermittelten Art bei Wahl eines der Anschlüsse einen im zentralen Steuergerät gespeicherter Satz von zugehörigen, festgelegten Steuerbefehlen für das entsprechende angeschlossene Gerät auswählen.
